Europäisches Patentamt

European Patent Office

Office européen des brevets

(19)

(11) **EP 1 114 793 A1**

(12) **EUROPEAN PATENT APPLICATION**
published in accordance with Art. 158(3) EPC

(43) Date of publication:
**11.07.2001 Bulletin 2001/28**

(51) Int Cl.[7]: **C01B 31/06**, C30B 29/04

(21) Application number: **98940510.5**

(86) International application number:
**PCT/IB98/01431**

(22) Date of filing: **08.07.1998**

(87) International publication number:
**WO 99/64353 (16.12.1999 Gazette 1999/50)**

(84) Designated Contracting States:
**AT BE CH CY DE DK ES FI FR GB GR IE IT LI LU MC NL PT SE**

(30) Priority: **11.06.1998 UA 98063031**

(71) Applicants:
• **Sereda, Anatoly Paxlovich**
**Kiev-010, 252010 (UA)**
• **Dyadenko, Arkadi Igorevich**
**Kiev-065, 252065 (UA)**

• **Piskovoi, Anatoly Dmitrievich**
**Kiev-033, 252033 (UA)**

(72) Inventor: **SEREDA, Anatoly Paxlovich**
**Kiev-010, 252010 (UA)**

(74) Representative:
**Ebbinghaus, Dieter, Dipl.-Ing. et al**
**v. Füner Ebbinghaus Finck Hano**
**Mariahilfplatz 2 & 3**
**81541 München (DE)**

(54) **HETEROGENEOUS LIQUID-PHASE CRYSTALLISATION OF DIAMOND**

(57)  The present invention relates to a principle for the heterogeneous liquid-phase crystallisation of diamond, wherein said crystallisation is carried out on the heterogeneous surface of a catalyst. This surface is characterised in that. during the high-temperature dchydrogenauon process of heavy hydrocarbons containing bitumen-tar and asphahenes. the catalyst performs a chemisorption of hydrogen under an atomic form. The catalyst surface submitted to the chemisorption exhibits a characteristic which is essential for the crystallisation of diamond in that only the growth of crystalline carbon-diamond is possible. This invention also relates to a method for impiementing this principle with a yield in excess of 3.000 carats of diamond crystais having various fractions of between 100 and 1000 microns. During the experiments, the largest diamond crystal obtained had dimensions of 3.5 x 3.5 mm. while the production of diamond crystals with maximal dimensions was not contemplated as a goal.

**EP 1 114 793 A1**

## Description

### Field of Invention

Application of synthetic diamonds (SD) in the modern material production sector has become extremely extensive. Actually, synthetic diamonds are now being utilised in all production industries. Now, SD are most widely used in mechanical engineering [1]:

>    diamond-abrasive machining of cutting tools;
>    diamond-abrasive grinding of metal surfaces;
>    diamond honing;
>    diamond-abrasive machining of brittle non-metallic materials;
>    machining of wood materials, plastics, and rubber;
>    utilisation of SD-based tools in well-drilling;
>    finishing of cemented-carbide and high-speed tools at all the tool-making production facilities.

Diamonds find extremely wide application in electronics. Thus, the development of diamond computer chips (Sumitomo Electric Co.), commercial production of heat sinks (same company), and acoustic membranes based on diamond films (Sony Corporation) has been reported in USA and Japan [2].

At present, diamond-based devices such as bipolar transistors, Schottky-barrier diodes, point-contact and field transistors have been developed. Of the highest practical interest are permeable-base microwave transistors. Microwave transistors feature a high power rating of up to 20 W at 30 GHz frequency, which is an order higher that the power of the most advanced devices of this type. Diamond, having a record value of heat conductivity, may result in a real revolution in the technology of substrates for large-scale and super large-scale chips [2].

It has to be noted that in the SD semiconductor technology only two or three alloying admixtures introduced in the course of crystal growth have been mastered, while natural diamonds contain 50 various alloying admixtures and defects in a number of combinations.

### Background of the Invention

Modern methods of diamond synthesis can be classified as follows [1]:

>    1. Synthesis carried out under high static pressure;
>    2. Synthesis under high loading;
>    3. Heterogeneous crystallisation from the liquid phase;
>    4. Laser synthesis;
>    5. Plasma synthesis.

One of the known-in-the-art analogues of the proposed invention comprises a method of heterogeneous gaseous-phase crystallisation of diamond, disclosed in [4].

In heterogeneous nucleation, one may discriminate two possible sources of atoms that form a critical nucleus, and those joining the growing stage. Carbon atoms (incorporated either in molecule or in radical) may join either directly from the gaseous phase (direct impact reaction, Riedel mechanism), or from adsorbed two-dimensional gas, due to the surface migration (Langmuir mechanism).

Let us now consider a two-component system, e.g. methane-hydrogen. The following symbols will be used:

>    $P_1$ ----$P_2$- partial pressures of methane and hydrogen.
>    $\theta_1$--$\theta_2$-extents of surface filling with adsorbed methane (or methyl radical) and hydrogen. Then the growth rate of graphite, limited by the nucleation rate, will be determined as

$$V \overset{\sim}{\phantom{.}} \theta_{\alpha\beta} + \theta_{\alpha\beta} \bullet J, \qquad\qquad (2.1)$$

where $J$ is the flow of methane molecules per unit surface. Here, the first addend corresponds to the nucleation from the two-dimensional adsorbed layer, while the second addend corresponds to the process of critical nucleus formation in compliance with the direct impact mechanism.

In case of applicability of Langmuir isotherms for a two-component system,

$$V_\beta = K_{\beta 1}\frac{P_1{}^2}{1+\dfrac{P_1}{b_1}+\dfrac{P_2}{b_2}}+K_{\beta 2}\frac{P_2}{1+\dfrac{P_1}{b_1}+\dfrac{P_2}{b_2}}, \qquad (2.2)$$

where $b_1$ and $b_2$ are methane and hyd-ogen adsorption constants; $K_{\beta 1}$ and $K_{\beta 2}$ are reaction rate constants that mainly depend upon temperature. In case of graphite growth on certain metals, the rate of its growth can be made substantially higher. Metal carbides (e.g. Ni carbides) may serve as finished critical nuclei. Another example of the elevated growth rate of graphite comprises formation of filamentary crystals. Here, basis planes are oriented along the direction of growth, thereby providing a high rate as well as outstanding tensile strength value.

The studies of diamond growth kinetics have been mainly carried out on fine diamond powders. Each particle of such powder comprises an imperfect crystal having high density of fractures and chips, i.e. finished growth steps. In addition, at the diamond edge (100) one atom already comprises a nucleus, and the work of formation is equal to zero.

Analysis of experimental data permits to assume the following mechanism of diamond growth. The diamond is growing either on those sites of a diamond substrate that are free from chemisorbed methane and hydrogen, or through the chemisorbed hydrogen, i.e.

$$V_\alpha \cdots (1-\theta_1-\theta_2)\cdot J_1+\theta_2\cdot J_1, \qquad (2.3)$$

where $\theta$ is the extent of surface filling; $J$ is the flow of hydrogen. When using Langmuir adsorption,

$$V_\alpha = K_{\alpha 1}\frac{P_1}{1+\dfrac{P_1}{b_1}+\dfrac{P_2}{b_2}}+K_{\alpha 2}\frac{P_2\cdot P_1}{1+\dfrac{P_1}{b_1}+\dfrac{P_2}{b_2}}, \qquad (2.4)$$

where $K_{a1}$ and $K_{a2}$ are the reaction rate constants on a clean surface and on a surface covered with chemisorbed hydrogen, respectively. It should be born in mind that adsorption constants in formula (1.4) relate to the diamond surface. As can be seen from this formula, under certain conditions the diamond growth rate will increase with the elevation of the partial pressure of gaseous hydrogen.

Joint analysis of equations (1.2) and (1.4) demonstrates the possibility of such process where the diamond growth rate will exceed the graphite growth rate to such extent that the latter could be considered as an admixture that can be overgrown with a diamond.

The proposed mechanism of growth permits to assume that graphite is growing through methyl radicals, while a diamond, at least partially, through $H_5$ metastable radicals.

Isobaric-and-isothermal potential of diamond exceeds that of graphite within the area of thermodynamic stability of the latter. Therefore, partial equilibrium pressures of carboncontaining gases above diamond is higher than above graphite. Calculations demonstrate that the equilibrium pressure of methane above diamond at temperatures exceeding 1000 °C is 2 times higher than above graphite. Consequently, at a given partial pressure of methane, supersaturation above diamond is always lower than above graphite. Depending on a temperature and total pressure, relative difference between supersaturation values above diamond and graphite will vary. Therefore, the ratio between diamond and graphite nucleation rates will also vary.

From the kinetics standpoint, the behaviour of diamond is much more inert to gases than graphite, which fact relates to their structural features. It is well known that chemical bonds within the diamond lattice are of $SP^3$ type of hybridisation, while for graphite they are of $SP^2$ type. The energy of a single $SP^2$ bond amounts to 348 J/mole, while the energy of a single $SP^3$ bond is 607 J/mole/ which far less than the total of single bonds energies. Substitution of two adjacent carbon atoms in the diamond lattice for hydrogen does not cause practical change of the nature of electron interactions, while similar operation carried out with carbon atoms in the graphite lattice modifies the nature of electron couplings throughout the whole carbon ring.

Likewise, different types of diamond and graphite interaction with atomic hydrogen may be likened to a difference between hydrogenation reactions of ethane and acetylene, or cyclohexane and benzene. This phenomenon serves the basis for diamond separation from graphite. Thus, during boiling in chloric acid (boiling point of 203 °C), atomic oxygen released during acid decomposition results in gasification of graphite, without any practical interaction with diamond.

Approximate diamond and graphite growth rates can be written down in the following form

$$V_{\alpha 1} = K_{\alpha 1} \cdot C_1 ..... ,..... V_{\beta 1} = K_{\beta 1} \cdot C_1 ....., \tag{2.5}$$

where $C_1$ is the concentration of carbon; $K_{\beta 1}$ are the reaction rate constants.

If the medium contains atomic hydrogen whose concentration substantially exceeds the equilibrium concentration at a given temperature, the rates of reversible reactions of gasification can be written down as follows:

$$\bar{V} = K_{\alpha 2} \cdot C_2 \cdots , \cdots \bar{V}_\beta = K_{\beta 2} \cdot C_2) \cdots , \tag{2.6}$$

where $C_2$ is the concentration of atomic hydrogen: $K_{\beta 2}$ are the constants of atomic hydrogen gasification reaction rates. A prerequisite of the lack of hydrogen release in other-than-diamond form will consist in

$$\bar{V}_\alpha = \bar{V}_\beta, \tag{2.7}$$

from which formula it would be easy to identify the critical concentration of atomic hydrogen

$$C_2 = (K_{\beta 1}/K_{\beta 2}) \cdot C_1 \tag{2.8}$$

under a given partial pressure of hydrocarbon.

The total growth rate of diamond comprises a difference between the rates of direct and reverse reactions

$$V_\alpha = \bar{V}_\alpha - \bar{V}_\alpha \tag{2.9}$$

By substituting critical values of atomic hydrogen, it is easy to obtain the value of diamond growth rate without graphite release.

$$V_\alpha = \bar{V}_\alpha \{1 - \frac{K_{\beta 1}}{K_{\alpha 1}} \frac{K_{\alpha 2}}{K_{\beta 2}} \tag{2.10}$$

To provide carbon crystallisation in the form of diamond, the following condition has to be met:

$$\frac{K_{\beta 1}}{K_{\alpha 1}} \frac{K_{\alpha 2}}{K_{\beta 2}} \cdots < \cdots 1. \tag{2.11}$$

The above calculation has been made without due account for the effect of molecular hydrogen on the process of crystallisation of diamond and graphite. In the latter case, the resulting formulas are very bulky and do not provide any completely new information. Kinetic features of diamond and graphite growth are involved in abnormal effects consisting in fractionation of $^{12}C$ and $^{13}C$ stable carbon isotopes. It has been found that during diamond growth, the latter absorbs a substantial portion of heavier carbon isotopes, while graphite "prefers" lighter ones. The effect of different fractionation of carbon isotopes may be explained if we assume that graphite is growing from $H_3$ radicals, while during the growth of diamond $H_5$ complexes are formed. In this case, separation factors for diamond and graphite will have opposite signs. As a result. diamond turns out to be "heavier" than graphite. This effect of structural fractionation of isotopes has a purely kinetic nature.

Separation factor of isotopes, obtained in the tests, is several orders higher than the thermodynamic effect of fractionation.

The properties of diamond powders grown from gaseous phase may be somewhat different from those of starting ones. Thus, their strength can be increased through healing of cracks and defects. Also possible is grafting of various functional groups to the diamond surface.

A substantial scientific and practical achievement comprises development of processes for producing diamond-like films from atom and ion beams.

In the course of growth of diamond-like films from atom and ion beams, carbon atoms (or complexes consisting of several atoms) do not immediately lose their mobility. Only after some time they get "built into" the lattice, thereby forming diamond and graphite types of bonds with other atoms. In this type of experiments, the substrate is generally cooled down to the liquid nitrogen temperature. Therefore, the authors conditionally discriminate a surface layer where formation of the nuclei of a new phase takes place, following which the particles of this new phase directly transfer to the solid phase.

The above-disclosed adsorption method of diamond crystallisation from gaseous phase onto various substrates (such as diamond, metal, dielectric) has not found commercial application since it does not open the way to applied technology in the production of synthetic diamonds.

Longstanding experimental science that has been trying to implement this concept has not yet achieved a required stage of development that would allow to unambiguously specify the criteria of production technology of diamond synthesis from gaseous phase with the use of various methods:

thermal decomposition of various hydrocarbons in the presence or in the atmosphere of various gases (hydrogen, argon, helium, and other diluent gases); plasmachemical methods of precipitating hydrocarbon plasma onto various substrates.

Among numerous methods implementing heterogeneous mechanism of SD synthesis from gaseous phase, it is impossible to give preference to any one of them with the aim of practical implementation. Despite availability of a great number of tests and sufficient theoretical justification of this concept, for the time being it is impossible to unambiguously identify the way to SD commercial production. Experimentally produced crystals are very small (about 50 μm), and diamond epitaxial films are generally polycrystalline, with numerous defects, and containing graphite and various carbon modifications. Moreover, upon attainment of a certain thickness (0.1 μm) of films grown on various substrates, epitaxial growth ceases at all.

At present, production of synthetic diamonds (SD) is carried out with the use of hydrostatic compaction method [3, 5] in the presence of metallic catalysts (Fe, Co, Ni, Mn etc.). The whole range of thereby produced SD is generally used for machining various materials with diamond tools. In such industries as radioelectronics and optics, SD are not used because of their poor properties or lack of required properties. The lack of adequate characteristics constitutes the result of the method of synthesis utilised.

The proposed invention provides total compliance with commercial production requirements to SD. Moreover, the inventive method of diamond crystallisation permits production of diamonds having predetermined properties, which cannot be offered by any of the known diamond crystallisation methods.

**Substantial differences of the proposed invention from the prototype**

"So far, in spite of substantial efforts by numerous scientists who have investigated various diamond deposits in Africa, Asia, and Australia, no universally recognised theory of diamonds formation has appeared" [1, p.32].

Analysis of natural sources of diamonds, kimberlites, and conditions of their bedding reveals one typical feature that is inherent in absolutely all kimberlite pipes:

the rock containing kimberlite pipes is generally represented by sandstone, shale, quartzite, hallite, and carbonate rock [6, 7];
all these types of rock are to some extent impregnated with bitumen [9, 16]

These are major criteria indicating diamond-bearing properties of kimberlites. However, there are no rules without exclusions. Known are numerous exclusions from this rule as well. Thus, a considerable number of kimberlite pipes, e.g. in the Yakut region, do not contain diamonds at all; instead they are completely graphitized (Botogol massif [29]). Analysis of this kimberlite demonstrates that this kimberlite is highly alkaline, and the process of catalytic dehydrogenation does not proceed in the presence of alkaline catalysts. The fact is generally recognised [17, 30].

Based on these facts and their analysis, the authors have arrived at the following conclusion: a source of carbon required for crystallisation of diamond is represented by the natural bitumen, and a prerequisite for heterogeneous crystallisation consists in the presence of bituminous rock, i.e. the rock containing kimberlite magma. Kimberlite magma comprises nothing but a source of heat required for the process of heterogeneous crystallisation of diamonds.

Generic theory of crystallisation disclosed in [8, p.57] asserts the following: "The growth of crystals proceeds in two stages. Stage one presumes formation of microscopic nuclei. Stage two consists in subsequent growth of such nuclei up to formation of certain faces, finally resulting in the formation of a crystal with its habitus. Crystal size and packing of atoms therewithin are governed by the nature of this crystal and its growing conditions.

Let us now consider conditions of formation of crystal nuclei (phase 2) from homogeneous phase 1, e.g. from vapour, melt, or solution.

Free energy of a supersaturated solution may decrease as a result of solid phase precipitation. Nevertheless, such liquids are remarkably stable since the solid phase may form only in the case of a decrease in the total energy of a system. Provided that a variation of the free energy during transition between solid and liquid phases is $G_v$, then the free energy of a system decreases by this magnitude for each unit volume of a formed solid body, while increasing by a magnitude equal to the energy of interface, $\sigma_{sl}$, for each unit area of the formed solid body-liquid surface.

With homogeneous nucleation, a variation of the free energy is given by the formula:

$$\Delta G = -\Delta G_v \bullet V - \sum_i A_i \bullet \sigma_{sl} , \qquad\qquad (3.1)$$

where V is the volume of a nucleus having face area $A_i$, and

$$\Delta G_v = -\alpha \bullet R \bullet T \bullet Ln(\frac{c}{c_0})^{\cdots} \qquad\qquad (3.2)$$

here, $\alpha$ is the number of ions formed from one molecule; R is the gas constant; T is the solution temperature; C is the concentration at T; $C_o$ is the concentration at $T_o$.

The behaviour of a newly formed crystalline-lattice structure in the supersaturated environment depends on the size of this structure. It can either grow or get dissolved; here, the process must result in a decrease of its free energy. Variations of free energy, volume energy, and free energy of nucleation, $\triangle G$, for spherical nuclei having radius r are expressed by the following formula:

$$\Delta G = \frac{4}{3} \bullet \pi \bullet r^3 \bullet \Delta G_l + 4 \bullet \pi \bullet r^2 \bullet \sigma_{sl}, \qquad\qquad (3.3)$$

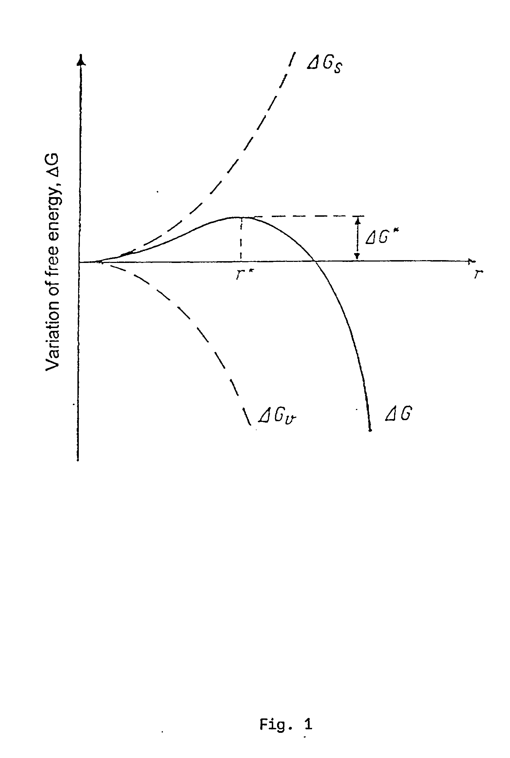

and illustrated in Fig.1.

Minimal size of stable nuclei of critical size is determined by differentiating the equation (3.3) by r, i.e.

$$\frac{d(\Delta G)}{dr} = 4 \bullet \pi \bullet r^2 \bullet \Delta G_v + 8 \bullet \pi \bullet r \bullet \sigma_{sl} \qquad\qquad (3.4)$$

and, by equating

$$\frac{d(\Delta G)}{dr}$$

to zero, we will find the critical radius of a nucleus:

$$r^* = -\frac{2 \bullet \sigma_{sl}}{\Delta G_v} \qquad\qquad (3.5)$$

Relevant critical free energy is

$$\Delta G^* = \frac{16 \bullet \pi \bullet \sigma_{sl}^3}{3 \bullet \Delta G_v^2} \qquad\qquad (3.6)$$

Dependence of $\Delta G$ on r demonstrates that nuclei less than $r^*$ will be dissolved, while those bigger than $r^*$ will grow. It follows from (3.5) that the value of $r^*$ decreases with a decrease in $\sigma_{sl}$ (i.e. supersaturation) and an increase in $\triangle G_v$ (i.e. supercooling).

Nucleation rate, *J*, *i.e.* the number of nuclei formed in unit volume during unit time, can be expressed by means of the Arrhenius equation:

$$J = J_0 \bullet \exp\left(\frac{-\nabla G^{\bullet}}{k \bullet T}\right) \cdots\cdots\cdots \; , \qquad (3.7)$$

where $J_0$ is the pre-exponential multiplier, and K is the Boltzmann constant.

Using the Gibbs-Thomson correlation:

$$Ln\left(\frac{c}{c_0}\right) = -\frac{2 \bullet \sigma_{sl} \bullet M}{k \bullet T \bullet r} \cdots\cdots\cdots , \qquad (3.8)$$

where M is the molecular volume, we obtain:

$$\Delta G_v = \frac{2 \bullet \sigma_{sl}}{r} = -\frac{k \bullet T}{M} Ln\left(\frac{c}{c_0}\right) = \frac{\Delta \mu}{M} \cdots \qquad (3.9)$$

In equation (3.7), $\Delta\mu$ is the variation of the difference of chemical potential of the given system. Thus, from equation (3.6), critical variation of the free energy is:

$$\Delta G^* = \frac{16 \bullet \pi \bullet \sigma_{sl} \bullet M^2}{3 \bullet \left(k \bullet T \bullet Ln\frac{c}{c_0}\right)^2} \cdots , \qquad (3.10)$$

and from equation (3.7), the nucleation rate is:

$$J = J_0 \bullet \exp\left[-\frac{16 \bullet \pi \bullet \sigma_{sl} \bullet M^2}{3 \bullet k^3 \bullet T^3 \left(Ln\frac{c}{c_0}\right)^2}\right] \cdots \qquad (3.11)$$

Equation (3.11) demonstrates that temperature, T, supersaturation coefficient, C, and energy of interface, $\sigma_{sl}$, determine the value of nucleation rate.

By regrouping equation (3.11) and assuming J to be equal one nucleus, so that *LnJ* is zero. we will obtain

$$S_{kr} = \left(\frac{\tilde{n}}{\tilde{n}_0}\right)_{kr} = \exp\left(\frac{16 \bullet \pi \bullet \sigma_{sl}^3 \bullet M^2}{3 \bullet k^3 \bullet T^3 \bullet LnJ_0}\right) \cdots . \qquad (3.12)$$

By substituting the values of various parameters, we can evaluate critical supersaturation required for spontaneous nucleation. Generally, supersaturation value of $\sim$4 *is used in the process of growing.*

The nucleation rate substantially depends upon the availability of growth sites on the surface. Thus, surface steps, inclusions etc. constitute natural prepared sites that initiate the nucleation process. This process is also stimulated by the presence, in a crystallizer, of certain areas having locally increased supersaturation (e.g. close to the cooling surface or on the liquid phase surface); by availability of cracks and slots in the crystallizer walls, as well as admixtures in the solution, since the presence of either an appropriate foreign body or a corresponding surface results in nucleation at lower values of supersaturation than those required for a spontaneous process. The total variation of the free energy, associated with the formation of critical nuclei under conditions of heterogeneous nucleation, $\triangle G^*_{get}$, must be lower than in case of homogeneous nucleation, $\triangle G^*_{gom}$, i.e.:

$$\triangle G\bullet^*_{gom} \bullet \Phi = \triangle G^*_{get} \cdots, \qquad (3.13)$$

where the multiplier $\Phi$ is smaller than 1.

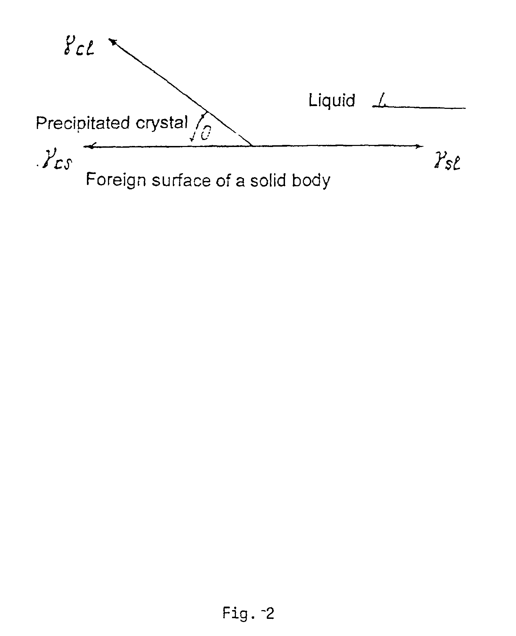

Now let us consider the process of origin of the crystalline phase out of the liquid one in the presence of a foreign solid phase (Fig.2). If a nucleus having radius r forms a contact angle θ with a foreign solid body, and if we designate $\sigma_{cl}$ to be the interface energy between the crystalline phase C and liquid L; $\sigma_{sl}$ to be the interface energy between the surface of a foreign solid body, S, and liquid; and $\sigma_{cs}$, the interface energy between the crystalline phase and the foreign solid phase, then the following expression may be written:

$$\sigma_{sl} = \sigma_{cs} + \sigma_{cl}\bullet\cos\theta\cdots, \qquad (3.14)$$

or

$$\cos\theta = \frac{(\sigma_{sl} - \sigma_{cs})}{\sigma_{cl}}\cdots\cdots, \qquad (3.14^*)$$

Next, we have

$$r^*_{get} = 2\bullet\sigma_{cl}/\Delta G^*_{get}\cdots. \qquad (3.15)$$

Multiplier $\Phi$ may be expressed as

$$\Phi = \frac{(2+\cos\theta)\bullet(1-\cos\theta)^2}{4}\cdots. \qquad (3.16)$$

Then, if θ is 180°, the function cosθ is -1, and equation (3.13) will take the following form:

$$\triangle G^*_{get} = \triangle G^*_{gom} \cdots, \qquad (3.17)$$

When θ is within the range of 0...180°, $\Phi$ is less than 1, and hence

$$\triangle G^*_{get} < \triangle G^*_{gom} \cdots. \qquad (3.18)$$

With θ equal to zero, $\Phi$ is also zero; then

$$\triangle G^*_{get} = 0.$$

Thus, with $\triangle G^*_{get}$ equal to zero, the energy of heterogeneous nucleation is the same as required for homogeneous nucleation. In this case, there is no affinity between the surface of a given crystalline solid body and a foreign solid body. In case of a partial affinity, when θ is more than zero and less than 180°, nucleation is facilitated. With complete affinity (θ is equal to zero), no nuclei are formed in the solution.

Since in case of heterogeneous nucleation $\triangle G^*_{get}$ is less than or equal to $\triangle G$, it can be easily seen [compare with equation (3.12)] that here nucleation takes place under lower values of supersaturation than those required for spontaneous nucleation [8].

As it follows from the above-disclosed crystallisation theory, the critical criterion in heterogeneous crystallisation comprises the function $\Phi(\theta)$ that characterises energy and structural properties of a foreign heterogeneous surface. With a maximum energy affinity, the gain in work of critical nucleus formation is substantial.

In the discussed process, the growth of diamond crystals is carried out from the liquid phase (bitumen) that according to the latest data constitutes a microheterogeneous dispersed liquid [9, 10, 11]. Bitumens are characterised by a complicated composition that mainly consists of constituents such as asphaltenes, tars and high-molecular hydrocarbons (oils). These constituents govern essential properties of bitumens. Asphaltenes contained in bitumens are the highest-molecular hydrocarbons that include all of the metals contained in the crude oil (V, Ni, Fe, Co, Mn etc.), and major portion of nitrogen, oxygen, and sulphur [11, p. 8]. Asphaltene molecule generally consists of carbon atoms (80 to 85 %), and the ratio between carbon and hydrogen atoms (C:H) varies within 0.8 to 0.87. The contents of heteroatoms (metals, oxygen, nitrogen, sulphur) amount from 5 to 11-14 % [9, 16]. Asphaltenes are products of tar condensation. It has been found that these two constituents (i.e. tars and asphaltenes) under certain conditions may transfer to one another. In bitumens, the tars are asphaltene placticizers and feature good solubility in oil hydrocarbons. Tars differ from asphaltenes in terms that they have a lower molecular mass (500-1200), while asphaltenes have an average molecular mass of 900-6000 [9, p. 32]. In contrast to tars, asphaltenes are not melted when heated but rather decompose in the temperature interval of 175-240 °C; maximum amount of asphaltenes in bitumens may reach 40 % [9]. Among all the bitumen constituents, asphaltenes are the highest-molecular; therefore, such a polydisperse solution as bitumen is considered as solution of PAV in hydrocarbons.

In the course of classification of natural diamonds, ten varieties were discriminated [12] in compliance with their external characteristics. Analysis of these varieties demonstrates that even within one variety it is impossible to find two identical crystals from the viewpoint of composition, structural defects, morphology, and various physicochemical characteristics. This is a critical practical information indicating that such a diversity of diamond crystals may be provided by the source of carbon material rather than by crystallisation conditions. At the same time, polycrystalline diamonds clearly indicate availability of a complicated source of carbon material in terms of its composition and structure. In addition, if we refer to the information on admixtures in diamond crystals, we will find that these admixtures are identical to admixtures of heteroatoms in bitumens [9, 11, 14].

It is necessary to mention such important parameter as $^{12}$C/$^{13}$C, ratio which amounts to 90.9 for bitumens [13, p. 106], and for natural diamonds is within 89.55 to 91.55 (carbonado diamonds, variety X) [12, p. 34].

It is known that the isotope composition and the ratio between admixtures in kimberlite magma are different from those of diamond and bitumen.

It is also known that the final product of thermal destruction of heavy oil raw material, tar, which is the starting material in bitumen production, is coke [11]. The most important constituents of tars and bitumens that transform to coke are resins and asphaltenes. The yield of coke produced from asphaltenes amounts to 57-75.5 % [14, p.51], and with various tars, up to 31 % [11; 14, p.51]. This yield however can be increased by increasing amounts of asphaltenes and tars in the raw materials [9, 11, 16].

In the process of thermal destruction of heavy oil residues and bitumens, complicated chemical reactions take place in the homogeneous phase with respcct to the final product, coke. In this complicated process, discriminated are the most important reaction stages that are characterised as disintegration and condensation reactions. Reactions of disintegration of heavy oil raw materials (tars, bitumens) are accompanied by endothermal effects, and condensation reactions, by strong exothermal effects, and by the end of the destruction process acquire the nature of chain reactions [8, p. 93-95]. Since these reactions proceed in the liquid phase, it would be expedient to consider this process from the qualitative standpoint. In the process of condensation (compaction) of liquid hydrocarbons, an important role is played by pressure.

There exists a well-known ratio in chemical thermodynamics, according to which the equilibrium constant, K, of a chemical reaction depends not only on temperature but also on pressure, and at a constant temperature the partial derivative from the Gibbs energy by pressure is expressed by the following equation [15, 19]:

$$-\left(\frac{\partial \Delta G}{\partial p}\right)_T = R \bullet T\left(\frac{\partial Ln(K)}{\partial p}\right) = -\Delta V \cdots\cdots\cdots, \qquad (3.19)$$

where $\triangle V$ is the variation of the Gibbs energy as a result of reactions of disintegration and compaction (condensation) of heavy hydrocarbons in a microheterogeneous solution (tar, bitumen); K is the constant of equilibrium reactions of the reactions under consideration; $\triangle V$ is the variation of solution volume as a result of thermal destruction of heavy crude oil.

As it follows from the theory of absolute rates of reactions, the dependence of compaction rate (these are reactions under consideration that contain disintegration reactions as an integral mechanism) can be expressed as follows:

$$\left( \frac{\partial Ln(k)}{\partial p} \right)_T = -\frac{\Delta V^{\bullet}}{R \bullet T} \cdots\cdots \qquad (3.20)$$

In this ratio, value $\Delta V^*$ is the variation of an activation volume along the reaction progress that represents a motion over the energy surface. The variation of an activation volume, which the reaction system is approaching, can be expressed by the ratio:

$$\Delta V^* = V_{x*} - V_0 \cdots, \qquad (3.21)$$

where $V_{x*}$ is the activation volume of a reaction solution of heavy hydrocarbons, and $V_0$ is the initial volume of this solution. As a result of condensation, in the activation volume $V_{x*}$ there takes place an increase of both the quantity of asphaltenes and the molecular mass of asphaltenes [9, 11, p.38-40], and in compliance with this motion the solution density increases due to the negative variation of $\Delta V^*$.

According to provisions of the modern theory, these variations are taken into account:

$$\Delta V^* = \Delta V_m^* + \Delta V_{r0}^* \cdots. \qquad (3.22)$$

In this equation, $\Delta V_m^*$ is the variation of the amount of reacting molecules in the course of formation of an activated complex therefrom. This provision may be considered both as transition of tars to asphaltenes and variation of the molecular mass of asphaltenes. The second component of equation (3.22), $\Delta V_{r0}^*$, which is less than zero, is the variation of solvent volume, that accompanies a transition to the activated complex [15, p.243].

If both values, $\Delta V_m^*$ and $\Delta V_{r0}^*$, are less than zero, and therefore $\Delta V^*$ is less than zero, condensation reactions will be substantially accelerated in case of pressure buildup in the system. By leading the reaction to its final point, we will obtain the reaction product, coke. Now let us consider the heterogeneous reaction of dehydrogenation of heavy hydrocarbons (bitumen), whose final product is crystalline carbon, diamond.

Under natural conditions, bitumen-containing rock is generally represented by dolomites, limestones, and sandstones [9, 16]. These types of containing rock serve as the catalysts during diamond crystallisation.

Adsorption of bitumen ingredients takes place on the surface of such rock which undergoes a number of substantial transformations [9; 11, p.56]. Pores of these minerals are penetrated by bitumen constituents having a relatively low molecular mass. On the contrary, hydrocarbons with a relatively high molecular mass, such as tars and asphaltenes, are adsorbed on the external surfaces of bitumen-containing minerals. It has to be noted that the bitumen capacity of such rock is rather high, i.e. up to 50 % from the rock mass. Thus, the bitumen film that covers the external surfaces of the minerals under consideration generally consists of tars and asphaltenes, which constitute the most polar constituents of bitumen.

Heating of such bitumen-containing rock up to 500-600 °C will result in the processes of dehydrogenation, disproportionation, and polycondensation [11, 14], whose products will include light steam-and-gas hydrocarbons and hydrogen. Hydrogen releasing both in atomic and molecular forms will be sorbed by bitumen-containing rock. Absorption of hydrogen proceeds in the form of chemisorption, i.e. in the atomic form. Actually, experimental facts confirm this provision on hydrogen chemisorption on the surfaces of minerals under consideration. Hydrogen has been found to feature substantial permeability in quartz, e.g. at 500 K permeability ratio of hydrogen is:

$$1_h = 0,0108 \bullet 10^{-15} \; mole \; m/m \; s \; Pa, \qquad (3.23)$$

and hydrogen diffusivity is:

$$D_H = 1,3 \bullet 10^{-12} \cdots m \; s \qquad (3.24)$$

at 750 K, these values correspondingly increase:

$$1_H = 0{,}176 \cdot 10^{-15} \, mole \cdot m/m \cdot s \cdot Pa \tag{3.25}$$

$$D_H = 3 \cdot 10^{-11} \ldots M^2/C \tag{3.26}$$

As can be seen from these experimental data on the hydrogen permeability of quartz, substantial increase in the hydrogen permeability takes place during temperature rise. At the same time, permeability of hydrocarbon gases releasing in the process of dehydrogenation, e.g. methane in quartz at 750 K has the following diffusivity value:

$$D_{CH_4} = 6 \cdot 10^{-22}, \tag{3.27}$$

which is eleven orders lower than with hydrogen [17, p. 119-120]. The data on hydrogen chemisorption on oxides under conditions of hydrogenation demonstrate that adsorption of hydrocarbons (paraffins, olefins) is lower than hydrogen adsorption. Thus, at 500-700 °C, hydrogen is chemisorbed by the catalyst and held in the reactor [17]. Therefore, reaction of hydrogenation is accompanied by chemisorption of hydrogen on the surfaces of bitumen-containing minerals under consideration, and results in the formation of a heterogeneous surface where the origin of diamond crystallisation centres is possible.

Release of steam-and-gas hydrocarbons is accompanied by bitumen compaction and decrease of free energy. As it follows from the results of thermography carried out with the use of DTA method (differential thermographic analysis) [18, p. 351] for various grades of bitumen, several endothermic effects and one exothermal effect can be distinguished during the heating process. Endothermic effects are characterised by softening, melting, gassing from the melt, and second melting with gassing. Exothermal effect takes place between melt gassing and second melting which is also accompanied by gassing. It is typical of exothermal effect that solidification and termination of gassing take place within this range of temperatures. This moment is very important moment in the process of thermal destruction of solid hydrocarbons. During this time, there occurs bitumen compaction accompanied by an increase of both the molecular mass and amount of asphaltenes [9; 11, p. 39]. An increase in the percentage of asphaltenes takes place due to the tar constituent of bitumen. The above-described exothermal effect relates to asphalts and asphaltites and is manifested in the same temperature range of 300 to 400 °C. The surface layer formed on particles of the minerals under consideration can be expressed schematically according to [19, p.234]:

$$V \leftarrow R \rightarrow S \rightarrow C.$$

This scheme reflects the process of coke formation, being a stage-by-stage process carried out in compliance with a homogeneous reaction. In case where the reaction proceeds according to the heterogeneous mechanism, the result of such reaction comprises crystalline carbon (diamond). Heterogeneous path of the reaction under consideration is characterised by multilayer coating of mineral surfaces with chemisorbed hydrogen. Such surfaces have qualitatively different parameters as compared to surfaces of minerals under consideration. Thus, in [20, p.83], surfaces of ZnO and TiO oxides have been investigated; surface charge on ZnO crystals changes during chemisorption.

It has to be noted that the density of surface states increases up to $10^{13}$ cm due to hydrogen donors. Such increase in the surface density of electrons results in the reduction of the work function [20, p.83], and emerging surface states are located within the forbidden band [17, p.100]. These newly acquired surface properties during hydrogen chemisorption create a completely different surface. Adsorption accompanied by formation of purely covalent bonds is possible on such surface.

The above-disclosed concept of diamond crystallisation has been proven experimentally. Used in the tests were catalysts such as sandstone, natural limestone, and mixtures of these minerals taken in various proportions. In addition, an experiment was carried out with asphalt concrete roadway covering that was removed after long-term (about 10 years) use. Prior to the experiment, removed roadway covering was ground and placed, in amount of 70 g, inside a container. This reaction bituminous rock was covered with powdered zeolite whose purpose consisted in sealing vaporous hydrocarbons formed in the course of thermal destruction.

The above tests resulted in production of rounded diamond crystals, both transparent and milk-white (Photo 1, 2). Thus, the authors managed to prove the above concept of diamond crystallisation, which is implemented under natural conditions in kimberlite pipes.

In heterogeneous crystallisation of diamond from a high-temperature bitumen solution on catalysts consisting from the above natural minerals, very low yield of diamond crystals was observed (up to 1 % from mother liquor or 0.2 % from the bituminous rock weight). This was the maximum yield of crystals, recorded during experiments with this type of catalysts and bitumen that had not been subjected to heat treatment.

Technical implementation of the above method of heterogeneous crystallisation from high-temperature solutions of heavy hydrocarbons has demanded a search of better catalysts. Such search of the most effective catalysts, that does not cover the whole variety of existing materials, has allowed more effective catalysts to be found. These catalysts turned to be fine-dispersed powders of iron and electrolytic nickel. Experiments carried out with the use of iron and electrolytic nickel powders taken in various proportions, have permitted to increase the yield of diamond crystals up to 60 % based on the initial raw material (bitumen).

Let us qualitatively consider the physical processes that take place during diamond crystallisation from solid hydrocarbons of bitumen type. Since the most essential points during diamond crystallisation comprise hydrogen release from solution being crystallised and its interaction with the catalyst (Fe, Ni), they will require further consideration [21, 22].

"The process of penetration of hydrogen molecules through metals includes several activated stages: dissociative chemisorption, transition from adsorbed to absorbed condition (dissolution), and diffusion into the metal bulk.

In gaseous phase, hydrogen atoms feature elevated, as compared to molecular hydrogen, potential energy (~2 eV) as a result of breakage of chemical bond in a hydrogen molecule (~4 eV). This elevated potential energy is released during the moment of contact between the atom and metallic surface (heat of chemisorption, Q, in the H-Fe system amounts to 133 kJ/mole, and in the H-Ni system, 125 kJ/mole [22, 23], and mostly transforms to the oscillation energy of surface atoms of metal. For atomic hydrogen, the process of dissolution is always exothermal."

Chemisorption of hydrogen may exert substantial influence on the variation of the work function , $\triangle\phi$, of metals. In some instants, in case of surface saturation with hydrogen, the variation of the work function may reach almost 1 eV; in majority of cases however the variation of $\triangle\phi$ does not exceed 0.4 eV; here, the sign of such variation can be either positive or negative [22, 25]. This is an important energy parameter of the surface since there exists the following relationship between the work function and surface energy [25]:

$$\sigma = \frac{3}{5} \cdot \frac{\phi}{\pi \cdot N \cdot \alpha^2}, \qquad (3.28)$$

where $\phi$ is the work function of an electron from the chemisorbed metal surface; N is the Avogadro number; $\alpha$ is the metal lattice parameter.

Considering the interface formed on chemisorbed surface of metal, it can be seen that such interface consists of polycondensed film of bitumen that gradually transforms to the crystalline form of carbon, i.e. diamond.

Hydrogen released from the bitumen solution that covers catalyst grains will be chemisorbed on the surface of catalytic metals. In the surface layer of catalyst metallic grains, both chemisorption and absorption of hydrogen atoms take place. These processes result in the formation of a transition zone in the area of liquid bitumen where hydrogen concentration, $C_H$, vanishes, while from the side of catalyst metallic surface, $C_H$ tends to unit, i.e. when the surface is completely covered with chemisorbed hydrogen. Thus, the motive force of the crystallisation process emerges.

"Numerous experimental data prove the direct relationship between surface (interphase) tension, $\sigma$, and density shock at the interface. Thus, according to the Bachinski formula [26],

$$\delta(\rho) = \dot{A} \cdot \sigma^{\frac{1}{4}} \qquad (3.29)$$

where A is a certain constant for the given pair of phases; $\sigma$ is the surface tension. Thus, in the general case, alongside with the temperature shock at the phase boundary and its time derivatives, the motive force of the process is also represented by the magnitude of interphase specific free energy [27]".

In this way, the formed diffusion layer having a thickness of $\delta$, consisting of polycondensed bitumen hydrocarbons and depleted in hydrogen, will be adsorbed to the chemisorbed hydrogen surface of the catalyst metal. Since the free energy of the bitumen solution can be only decreased in the process of thermal destruction, adsorption of carbon constitutes an exothermal process. The heat released in chemisorption of hydrogen, $Q_H$, and the heat released in adsorption of carbon, $Q_C$, will be added up:

$$Q_r = Q_H + Q_C \qquad (3.30)$$

where $Q_r$ is the total heat of crystallisation reaction, which is the motive force of the crystallisation process.

Now, having disclosed the physical mechanism of diamond crystallisation, we can move to the kinetic description of the crystallisation process, presented in study [8, p.92].

"If the growth is strictly limited by the volume diffusion, the mass flow $J_m$ of solution from the solution volume having $C_c$ concentration of carbon is caused by the volume diffusion as well as by diffusion of the drift flow, and is described by the following expression:

$$J_m = D{\bullet}\rho_s {\bullet} \frac{dc}{dx} + J_m {\bullet} c, \qquad (3.31)$$

where x is the distance from the crystal face, and $\rho_s$ *is* the solution density.

Growth rate is:

$$V = \frac{J_m}{\rho_c} = \frac{\rho_s \bullet D}{\rho_c \bullet \delta} \bullet \ln\left(\frac{1-c}{1-c_0}\right), \qquad (3.32)$$

where $\rho_c$ is the density of diamond; $C$ and $C_0$ are carbon concentrations in the solution (x>$\delta$) and on the crystal surface (x=0), respectively; $\delta$ is the thickness of diffusion layer. Concentration is expressed as mass portion of carbon dissolved in the solution.

According to equation (3.32), the diagram showing dependence of V on

$$\rho_s \bullet \ln\left[\frac{1-c}{1-c_0}\right] \qquad (3.33)$$

gives a line with a slope of

$$\frac{D}{\rho_c \cdot \delta} \qquad (3.34)$$

Therefore, if the value of $\rho_c$ is known, we can identify (the coefficient of mass transfer).

$$\frac{D}{\delta} = K_J \qquad (3.35)$$

The coefficient of mass transfer. $K_d$, can be obtained from the following ratio:

$$N'_{sh} = B + 0{,}6 N'^{\frac{1}{2}}_{Re} \bullet N^{\frac{1}{3}}_{Sc}, \qquad (3.36)$$

where $N_{sh}$ is the Sherwood number equal to:

$$N_{sh} = K_d \bullet \frac{x}{\delta}, \qquad (3.37)$$

$N_{Re}$ is the Reynolds number:

$$N_{\text{Re}} = \frac{x \bullet w}{v}, \qquad\qquad (3.38)$$

and $N_{sc}$ is the Schmidt number:

$$N_{\text{sc}} = \frac{v}{D}. \qquad\qquad (3.39)$$

Here, constant B is assumed to be 2 for spheres, and

$$2\sqrt{2}$$

for octahedrons. In equations demonstrating Reynolds, Schmidt, and Sherwood numbers, x is the dimension of a crystal; $v$ is the kinematic viscosity, and W is the relative speed between the crystal and volume.

With low relative speeds or in case of still solutions, when the first term in the right-hand part of equation (3.36) is significant, we obtain:

$$K_{\text{d}} = \frac{B \bullet D}{x} \qquad\qquad (3.40)$$

With high relative speeds, when the second term is significant (in case where stirring is carried out within the crystallizer), we obtain:

$$K_d = 0{,}6 \frac{D^{\frac{2}{3}} \bullet W^{\frac{1}{2}}}{x^{\frac{1}{2}} \bullet v^{\frac{1}{6}}}, \qquad\qquad (3.41)$$

or in case where x is equal to 1,

$$\delta = 1{,}6 D^{\frac{1}{5}} \bullet v^{\frac{1}{6}} \bullet W^{-\frac{1}{2}}. \qquad\qquad (3.42)$$

In addition to mass transfer, the growth rate may be affected by heat evolution or absorption on the surface, caused by the growth itself (equation (3.30)).

The non-dimensional parameter defined as:

$$\xi = -\left( \frac{D \bullet \Delta \overline{H}}{K} \right) \bullet \left( \frac{\partial c_0}{\partial T} \right) \qquad\qquad (3.43)$$

takes into account simultaneous transfer of mass and heat. Here, $\Delta \overline{H}$ is the variation of partial molar enthalpy during growth, and T is the temperature of solution.

With stationary flow of reaction, the rate of molecular (volume) diffusion becomes equal to the reaction rate irrespective of conditions of the given process".

In fact, since the process of crystallisation proceeds within the limits of a moving boundary surface having a thickness of $\delta$, all the processes relate to this boundary surface. Hydrocarbon radicals, steam-gas constituents of thermal destruction of bitumen, and hydrogen both in atomic and molecular forms may diffuse from the surface into the solution volume.

In the discussed heterogeneous mechanism of crystallisation, several stages may be distinguished. Stage one of the process comprises formation of chemisorbed surface of hydrogen on crystallizer grains (Fe, Ni). Hydrogen chemisorption on metals can be theoretically described [21,22,23].

"If an $H_2$ molecule is adsorbed dissociatively, in two steps, then the following process takes place:

$$\frac{1}{2}H_2 + S_p \rightarrow H^*, \tag{3.44}$$

and adsorption rate is:

$$\xi = -\left(\frac{D \bullet \Delta \overline{H}}{K}\right) \bullet \left(\frac{\partial c_0}{\partial T}\right) \tag{3.43}$$

Desorption rates are always proportional to the amount of adsorbed matter, $\Theta_H$; therefore , for these rates the following expressions are valid:

$$V_{-2} = k_{-2} \bullet \Theta_H \tag{3.46}$$

From expressions (3.42) and (3.43), in case of equilibrium of adsorption and desorption rates, we obtain:

$$\Theta_H = \frac{\dfrac{k_2}{k_{-2}} \bullet P^{\frac{1}{2}}_{H_2}}{1 + \dfrac{k_2}{k_{-2}} \bullet P^{\frac{1}{2}}_{H_2}} \tag{3.47}$$

With $\Theta_H$ tending to unit, the whole surface of a catalyst will be coated with a multiatom layer of hydrogen, this layer being the only one where formation of critical nuclei of diamond is possible. At stage three, diffusion growth of diamond crystals takes place.

The above mechanism of diamond crystallisation, in contrast to the described analog where adsorption mechanism without hydrogen dissociation is disclosed, provides no positive results in practical implementation thereof, which fact is noted by the authors of the theory [14].

At present, production of synthetic diamonds is carried out with the use of hydrostatic compaction method, in the presence of metallic catalysts (Fe, Ni, Mn, Co, and other metals). The whole range of SD produced by this method is generally used for machining various materials with diamond tools. In such industries as radioelectronics and optics, SD are not used because of their poor properties that do not comply with the requirements of these areas of industrial production.

The proposed invention permits to achieve complete compliance with the industry requirements to synthetic diamonds. Moreover, the proposed method of diamond crystallisation provides production of diamonds with predetermined properties; such results cannot be provided to the industry by any of the known methods of diamond crystallisation.

**BRIEF DESCRIPTION OF FIGURES AND DRAWINGS**

1. Fig.1 shows the diagram of dependence of free energy on the size of a critical nucleus in diamond crystallisation.
2. Fig.2 demonstrates the vector diagram of surface forces in the process of diamond crystallisation. Here, designations of surface force vectors denoted as $\gamma_{cl}$, $\gamma_{cs}$, $\gamma_{sl}$, correspond to designations taken in the text of description as $\sigma_{cl}$, $\sigma_{cs}$, $\sigma_{sl}$, respectively.
3. Fig.3 demonstrates the dependence of variation of molecular weights of bitumen ingredients in the process of heating. Here, curve 1 corresponds to oils; curve 2, to silica resins; curve 3, to asphaltenes.

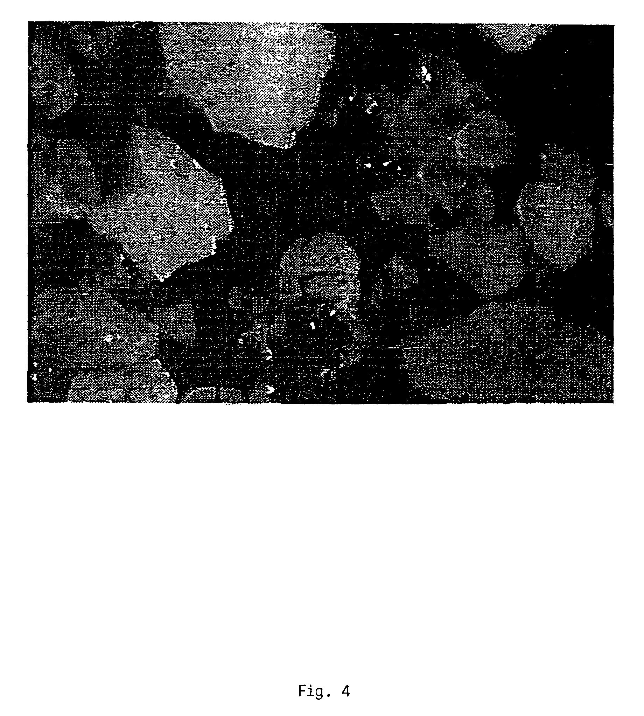

4. Fig.4 shows crystals produced by crystallisation on oxides that correspond to natural crystallisation conditions.

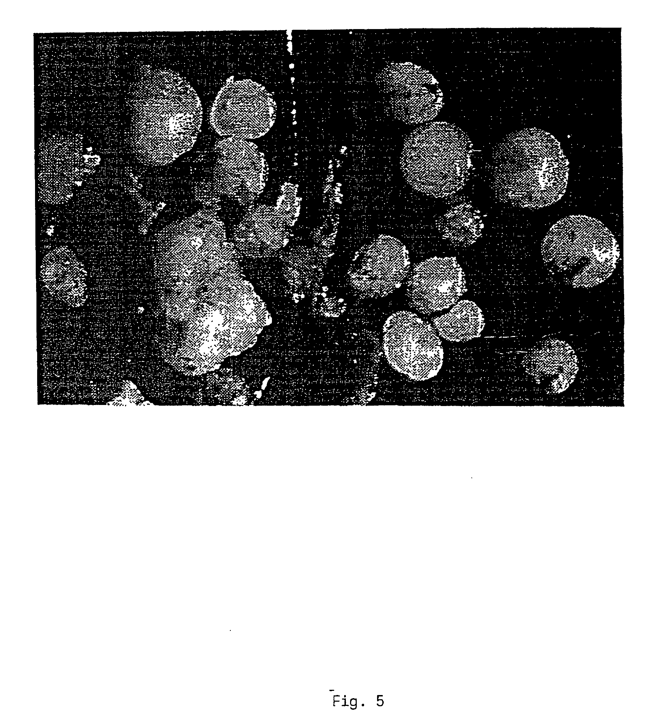

5. Fig.5 shows spherical crystals produced on oxides that correspond to natural crystallisation conditions.

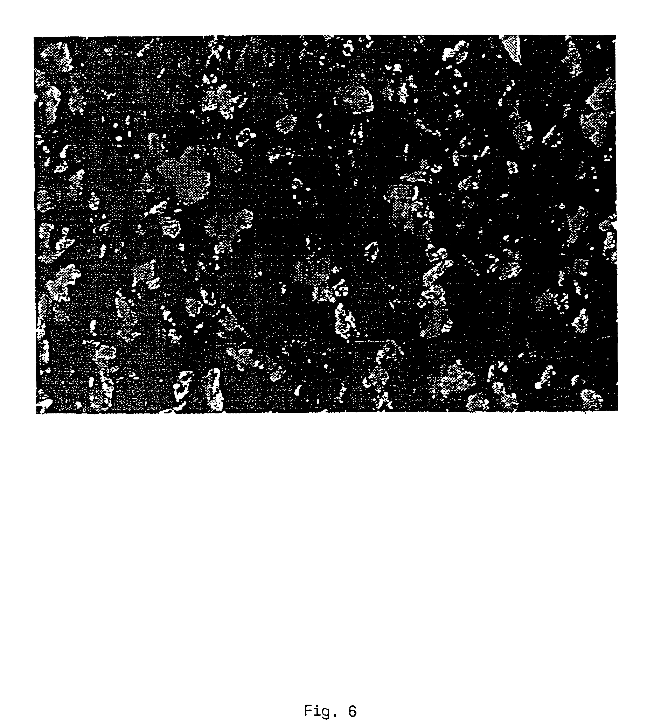

6. Fig.6 demonstrates crystals produced with the use of metallic catalysts (powdered Fe and Ni).

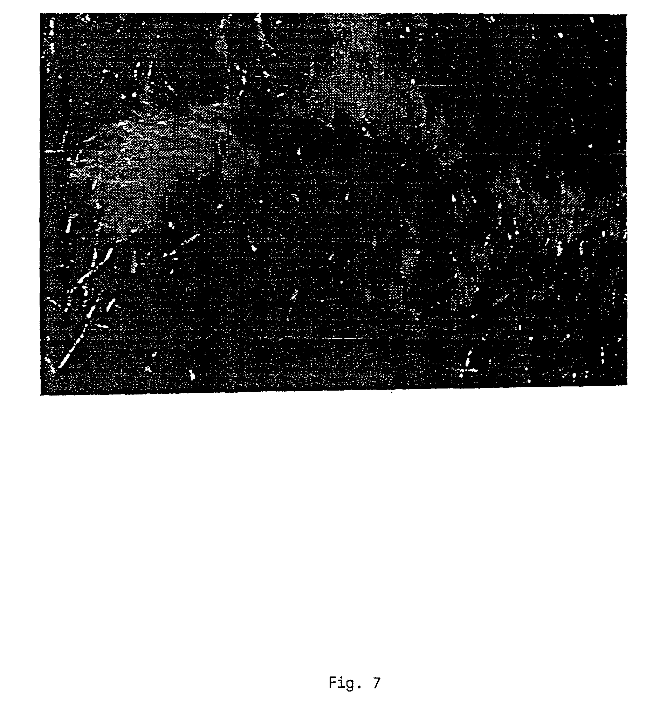

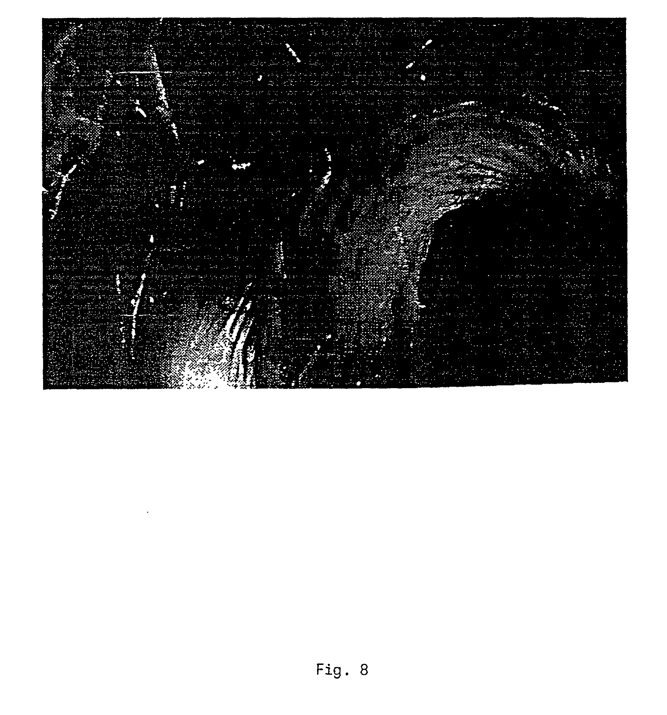

7. Figs 7 and 8 show filamentary crystals produced with the use of metallic catalysts (powdered Fe and Ni).

**Data Confirming Possibility of Implementing the Invention**

Experimental confirmation of the proposed invention was carried out with the use of the method of catalytic dehydrogenation of solid petroleum products (SPP). Catalysts used in a series of experiments on diamond crystallisation were finely dispersed metallic powders of the following types:

PZhK iron powder: 0.1 mm;
PNE1 nickel powder: 0.05 mm.

Mechanical admixture of powders was prepared both in volume and weight ratios. Volume ratio corresponded to the following proportion: 60 vol.% powedered Fe; 40 vol.% powdered Ni. Powders taken in such ratio were thoroughly mixed. Similar procedure was used for the weight ratio. No substantial technical differences between volumetric and weight methods were found in experiments. The catalyst prepared by bulk mixing in the above proportions was calcined in a muffle furnace for two hours at 500 °C.

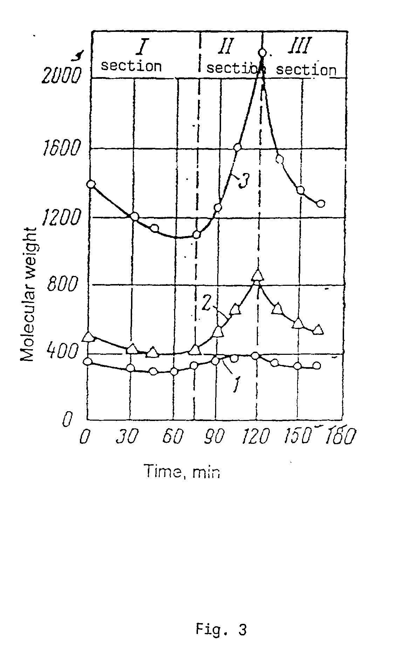

Solid hydrocarbon was grade BND bitumen. At first, bitumen was heated for two hours at 410 °C. Selection of bitumen heat treatment temperature was not random; it was based on experimental data on coking of heavy rude oil [11, 14]. As indicated in Section 3, at such temperature there occur destruction of bitumen constituents and substantial increase in the amount of asphaltenes up to the maximum value (Fig.3). Qualitative monitoring of the amount of asphaltenes was carried out by the fluorescent method, with the use of MIN-8 microscope. The slide was coated with a film of bitumen that had passed heat treatment in a chloroform exhaust system. Selection of raw material was carried out from intensity of the fluorescence that has white-blue colour of various intensity, depending on a bitumen batch and quality of heat treatment. Thus, the raw material that had been prepared and selected according to the maximum fluorescence was taken for experiments. Generally, after 2 hours of heat treatment of bitumen, its mass amounted to not more than 50-55 % from the initial value.

The charge of heat treated bitumen in an amount of 100 g was placed into a container that comprised a usual cylinder made of Ti, having 80 mm ID and 10 mm wall thickness. A three-section, 750 W electric heater was placed on the external surface of this cylinder.

The bitumen placed into the container was heated up to complete melting. The molten mass of bitumen was added with metal catalyst in the form of Ni and Fe metallic powders taken in the above-mentioned volume ratio. The amount of a poured catalyst was 200 to 240 g. The catalyst was mechanically mixed with the molten bitumen till the state of homogeneity. On the top of this reaction mass, additional catalyst was poured in an amount of 400 g to produce an excessive pressure within the container reaction area; at a distance of 10 mm from the container bottom, KhK thermocouple was mounted with the aim of recording the temperature within crystallisation area by means of a potentiometer. This was the end of the preparatory process before starting diamond crystallisation.

The thus prepared crystallisation container was connected to a voltage controller that was used to control the heating of crystallisation mass. Maximum heating temperature did not exceed 550 °C. Crystallisation of diamond took place at this preset temperature. The time of reaction was limited to 4, 6, and 8 hours, respectively. Optimal duration of crystallisation, which appeared to be 6 hours, was identified experimentally. Additional holding a a preset temperature did not result in any substantial change of the final result.

In the series of experiments performed, the yield of diamond crystals amounted to 40-50 % from the weight of reaction bitumen. Absolute expression of this magnitude corresponded to 40-50 grams of crude diamonds. This value of the yield of diamond crystals had a stable nature and was average in the performed tests.

Extraction of diamond crystals after the test was carried out with the use of magnetic separation method that was preceded by the operation of mechanical crushing of the caked crystallisation mass. Upon completion of magnetic separation, metallic catalyst was again sieved and subjected to calcination at 550 oC in a muffle furnace. The time of calcination did not exceed 1.5 hours, upon which the container was cooled with the muffle furnace. After cooling. the container was removed, and its contents was again subjected to mechanical crashing and magnetic separation. As a result of this operation, 10 to 15 g more diamond crystals were extracted. With such crystallisation technology, the total amount of extracted diamonds was 50-65 g (Photo 3).

The series of performed tests yielded more than 3000 carats of diamonds of various fractions (between 100 and 1000 μm). It has to be noted that diamonds sizing less than 100 μm were not extracted. Maximum size of diamond crystals extracted during tests did not exceed 3.5 mm. The production of diamond crystals with maximal dimensions was not contemplated as a goal during tests.

With the aim of studies, resulting crystals were treated in a mixture of sulphuric and nitric acids, using a standard commercial method. With such method of treatment, a loss of weight was observed in extracted crystals. The change of crystals weight reached the value of 15 % from the initial value. This fact is natural since extracted crystals were covered with a layer of graphite in the form of an ultradispersed powder.

Density of diamond crystals was within the range from 3.35 $g/cm^3$ (milk-white variety, foam-like) to 3.54 $g/cm^3$ (transparent crystals). The refractive index measured by V.I. Lodochnikov method was 2.4. The authors did not have the opportunity to carry out more accurate measurements.

Comparative studies of produced diamond crystals and natural crystals from Yakut deposits, carried out with the use of the fluorescent method, have not revealed any substantial difference. Fluorescence of both natural and synthetic crystals is generally white-blue during excitation with the light of DRSh-250 mercury lamp, passed through UFS-3 ultraviolet light filter. In so doing, we have also found spontaneous polarized luminescence that is typical only for natural crystals. In the studies of filamentary crystals (Photo 4.5), luminescence is observed in all the filaments (white-blue luminescence). Individual filaments demonstrate particularly intense light-blue luminescence. Filamentary diamond crystals produced in the tests do not feature spontaneous polarized luminescence; at least, we could not find this kind of luminescence. The length of a filament extracted from a chaotic interlacing exceeded 1 m. Average diameter of filaments was 35 μm.

Studies of the crystals in polarized light (crossed nicols) revealed inclusions of the "diamond-in-diamond" type. Here, extinction of the parent crystal is accompanied by the clearing-up of the inclusion crystal. Studies carried out both fluorescent and polarization methods have not revealed any differences from natural diamond crystals. These experimental data clearly prove finding of both crystallisation conditions and the parent source of carbon material, i.e. mother liquor of carbon.

The above-described process of diamond crystallisation permits to arrange, without any substantial expenses, a production that would completely satisfy the demand of all industries for this unique material. From standpoint of technology, embodiment of the disclosed method of diamond crystallisation can be carried out through the use of various methods. For example, it is possible to use the method of direct static compaction with the application of catalysts that actively absorb hydrogen by way of chemisorption. This method may be used to produce diamond crystals with predetermined properties, which fact is of substantial importance for various diamond-using sectors of industry. Considering all the above disclosed, the existing industry of diamond synthesis with all its high-pressure and high-temperature chambers used to carry out production stages become unnecessary. Elimination of these production stages and substitution of the above equipment for regular moulds will result in substantial reduction of costs required to produce diamonds pertaining to natural groups in accordance with the existing classification.

REFERENCES

1. Application of Superhar Materials . Vol. 3 . Kiev, Naukova Dumka, 1986.

2. Diamonds in Electronic Engineering. Edited by V.B. Kvasko v, Candidate of Science (Physics), Energoatomizdat, 1990.

3 . V.G . Alyoshin, V.D . Andreev, G.P . Bogatyryova et al. Synthesis of Superhard Materials. Vol.1, Kiev, Naukova Dumka, 1986.

4.D.V. Fedoseev, V.V. Deryagiy, I.G. Varshavskaya, A.S. Semenova-Tyan-Shanskaya. Crystallisation of Diamonds. Moscow, Nauka, 1984.

5. V.E. Khadzhi, L.I. Tsinober, L.M. Shterenlikht et al. Minerals Synthesis. Vol.1, Moscow, Nedra, 1987.

6. I.P. Ilupin, V.I. Vaganov, B.I. Prokopchuk. Kimberlites. Manual. Moscow, Nedra, 1990.

7. J. Dawson. Kimberlites and Xenolites Contained Therein. Translated from English, 1983.

8. K. Sangwal. Etching of Crystals. Translated from English by A.V. Bystritski and T.I. Markova (Cand.Techn.Sc.), Moscow, Mir, 1990.

9. I.M. Rudenskaya, A.V. Rudenski. Organic Binders for Road Construction. Moscow, Transport, 1984.

10. B.G. Pecheny. Bitumens and Bituminous Compositions. Moscow, Khimiya, 1990.

11.A.F. Krasyukov. Petroleum Coke. Moscow, Khimiya, 1968.

12. Yu.L. Orlov. Mineralogy of Diamond. Moscow, Nauka, 1973.

13. Brief Manual on Geochemistry. 2nd Edition, revised and amended. Moscow, Nedra, 1977.

14. N.T. Pokhodenko, B.I. Brondz. Production and Processing of Petroleum Coke. Moscow, Khimiya, 1986.

15. S.G. Entelis, R.P. Tiger. Kinetics of Liquid-Phase Reactions). Moscow, Khimiya, 1973.

16. Geological Conditions of Deposits of Natural Bitumens. Institute of Geology and Development of Natural Fuels. Moscow, Nauka, 1981.

17. B.V. Voitsekhovski, A. Korma. Catalytic Cracking. Catalysts, Chemistry, Kinetics. Translated from English by O.Yu. Pesnna. Moscow, Khimiya, 1990.

18. Thermal Analysis of Minerals and Rock. VSEGEI. Leningrad, Nedra, 1974.

19. Yu.M. Zhorov. Kinetics of Commercial Organic Reactions. Manual. Moscow, Khimiya, 1989.

20. A.G. Kotov, V.V. Gromov. Radiation Physics and Chemistry of Heterogeneous Systems. Moscow, Energoatomizdat, 1988.

21. V.I. Ageev, I.N. Beckman, O.P. Burmistrov et al. Hydrogen Interaction With Metals. Moscow, Nauka, 1987.

22. Hydrogen in Metals. Vol. 1,2. Edited by G. Alefeld and I. Felkl. Translation from edited by Yu.M. Kagan, Corresponding Member of the USSR Academy of Science. Moscow, Mir, 1981.

23. K. MacCay. Hydrogen-Metal Compounds. Translated from English by Yu.B. Grebenschikov. Moscow, Mir, 1968.

24. V.S. Fomenko, I.A. Podchernyaeva. Emissive and Adsorptive Properties of Substances and Materials. Manual. Moscow, Atomizdat, 1975.

25. V.K. Semenchenko. Surface Phenomena in Metals and Alloys. National Publishing House for Technical and Theoretical Literature. Moscow, 1957.

26. P.G. Romankov, N.B. Rashkovskaya, V.F. Frolov. Mass Exchange Processes in Chemical Technology. Leningrad, Khimiya, 1975.

27. Growth of Crystals. Growth Theory and Methods of Crystal Growing). Vol.1. Edited by K. Gudman. Translated from English by E.I. Givargizov (Doctor of Science, Physics) and S.N. Gorin (Cand.of Science, Physics). Moscow, Mir,

28. R.V. Lobzova. Graphite and Alkaline Rock in Botogolsky Massif Area. Moscow, Nauka, 1975.

29. Scientific Foundations of Catalytic Conversion of Hydrocarbons. Ukrainian SSR Academy of Science, Institute of Gas Technology. Kiev, Naukova Dumka, 1977.

30. Yu.I. Dytnerski, V.P. Brykov, G.G. Kargamanov. Diaphragm Separation of Gases. Moscow, Khimiya, 1991.

**Claims**

1.  A method of heterogeneous liquid-phase crystallisation of diamond by way of adsorption interaction between dehydrogenated constituents of bitumen and a hydride surface of a material, wherein the hydride surface of a catalyst is formed by hydrogen chemisorption during high-temperature and catalytic dehydrogenation of polydisperse high-molecular constituents of bitumen tars and asphaltenes, followed by adsorption transfer of said asphaltenes to the crystalline condition, diamond.

Fig. 1

$\gamma_{c\ell}$

Liquid $L$

Precipitated crystal $\theta$

$\gamma_{cs}$ $\gamma_{s\ell}$

Foreign surface of a solid body

Fig. 2

Fig. 3

Fig. 4

Fig. 5

Fig. 6

Fig. 7

Fig. 8

## INTERNATIONAL SEARCH REPORT

| International application No. |
| --- |
| **PCT/IB 98/ 01431** |

**A. CLASSIFICATION OF SUBJECT MATTER**

**IPC 6** C01B 31/06, C30B 29/04

According to International Patent Classification (IPC) or to both national classification and IPC

**B. FIELDS SEARCHED**

Minimum documentation searched (classification system followed by classification symbols)

**IPC 6** C01B 31/06, C30B 29/04

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | RU 2102316 C1 (GOLOBOV OLEG ALEXANDROVICH) 20 January 1998 (20.01.98) | 1 |
| A | SU 1345581 A1 (INSTITUT FIZIKI VYSOKIKH DAVLENY) 30 March 1993 (30.03.93) | 1 |
| A | SU 1533221 A1 (INSTITUT FIZIKI VYSOKIKH DAVLENY et al) 23 February 1993 (23.02.93) | 1 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 14 January 1999 (14.01.99) | 10 March 1999 (10.03.99) |

| Name and mailing address of the ISA/ RU | Authorized officer |
| --- | --- |
| Facsimile No. | Telephone No. |

Form PCT/ISA/210 (second sheet) (July 1992)